# FASCICULE DE BREVET EUROPEEN

(11) **EP 2 577 234 B1**
(45) Date de publication et mention de la délivrance du brevet: **02.07.2014**
(21) Numéro de dépôt: 11727234.4
(22) Date de dépôt: 19.05.2011
(51) Int. Cl.: G01D 7/10, G01D 7/00

(54) **DISPOSITIF INDICATEUR DE TABLEAU DE BORD A MOUVEMENT PLAN COMPLEXE**
INDIKATOR EINER INSTRUMENTENTAFEL MIT KOMPLEXER PLANARER BEWEGUNG
INDICATOR DEVICE OF AN INSTRUMENT PANEL HAVING COMPLEX PLANAR MOVEMENT

(30) Priorité: 26.05.2010 FR 1002218
(43) Date de publication de la demande: 10.04.2013
(73) Titulaire: Moving Magnet Technologies, 25000 Besançon (FR)
(72) Inventeur: PRUDHAM, Daniel, F-25220 Thise (FR)
(74) Mandataire: Breesé, Pierre
(86) Numéro de dépôt international: PCT/FR2011/051137
(87) Numéro de publication internationale: WO 2011/148082

(56) Documents cités:
- DE-A1-102005 015 178
- FR-A1- 2 679 998
- FR-A1- 2 938 056

## Description

### DOMAINE TECHNIQUE DE L'INVENTION

L'invention se rapporte au domaine des systèmes d'entraînement d'un organe d'information visuelle tel qu'une aiguille, et en particulier au déplacement d'un tel organe pour un indicateur de tableau de bord (tachymètre, jauge carburant, ...).

Plus précisément, l'invention concerne un dispositif indicateur notamment utilisable sur le tableau de bord d'un véhicule et comprenant au moins des premier et deuxième moteurs, des premier et deuxième arbres, un organe de guidage, un organe d'information visuelle, et un lien cinématique, les premier et deuxième arbres étant sélectivement entraînés en rotation par les premier et deuxième moteurs respectifs autour de premier et deuxième axes de rotation respectifs, ledit organe de guidage étant lié en rotation au premier arbre autour du premier axe de rotation et s'étendant suivant une direction transversale à ce premier axe de rotation, ledit organe d'information visuelle étant guidé en translation, le long de ladite direction transversale, par l'organe de guidage, et ledit lien cinématique reliant le deuxième arbre à l'organe d'information visuelle et transformant sélectivement une rotation du deuxième arbre autour du deuxième axe de rotation en une translation de l'organe d'information visuelle suivant ladite direction transversale.

### ETAT DE LA TECHNIQUE ANTERIEURE

Un dispositif indicateur de ce type est par exemple décrit dans le brevet FR 2 679 998.

En dépit de son intérêt, notamment par la possibilité qu'il offre d'afficher simultanément deux paramètres différents, le dispositif décrit dans ce brevet antérieur présente un encombrement important, en particulier en raison de la nécessité qu'il impose d'utiliser des cadrans en arc de cercle.

FR 2 938 056 et DE 10 2005 015178 décrivent de plus des afficheurs dont l'indication selon la direction transversale se fait en utilisant un afficheur LCD porté par l'aiguille en rotation.

Plus généralement, on connait déjà, dans l'art antérieur, de nombreuses solutions pour déplacer l'aiguille d'un indicateur de tableau de bord. Par exemple, le document de brevet FR 2 859 323 décrit un système permettant de déplacer une telle aiguille en rotation. Selon ce document, l'aiguille est entraînée au moyen d'un moteur sans balai, par l'intermédiaire d'un système de réduction mécanique.

Par exemple encore, le brevet FR 2 885 688 présente un ensemble de deux moteurs juxtaposés entraînant deux arbres coaxiaux qui permettent de déplacer en rotation deux aiguilles indépendamment l'une de l'autre, cet agencement étant particulièrement destiné aux jauges à indicateurs concentriques.

De tels systèmes d'entraînement permettent de réaliser un mouvement d'une ou deux aiguilles dans un plan, mais uniquement selon un déplacement angulaire.

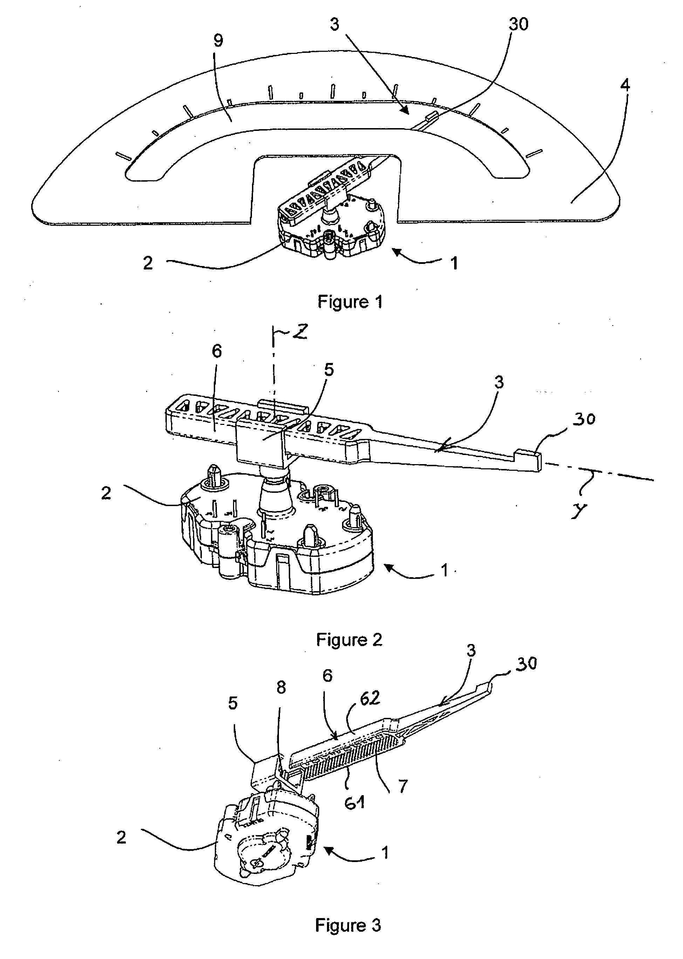

Les constructeurs automobiles ont récemment développé de nouveaux types de jauge dont l'affichage n'a plus la forme d'un disque, mais prend des formes elliptiques ou oblongues telles qu'illustrées par exemple à la figure 1.

Cependant, il n'existe actuellement aucun indicateur analogique de structure simple qui soit commandé par des moteurs électromagnétiques et qui soit adapté à ce nouveau type de jauges, les solutions actuelles utilisant le plus souvent un affichage numérique à cristaux liquides.

On connaît également, grâce aux brevets US 5 720 590 et EP 0 793 262, des ensembles de moteurs permettant de déplacer des matrices de semiconducteurs avec un mouvement dans le plan.

Ces dispositifs connus ont cependant toujours l'inconvénient de présenter un encombrement important qui en limite le champ d'application.

### EXPOSE DE L'INVENTION

Dans ce contexte, la présente invention a pour but de proposer un dispositif indicateur qui soit notamment utilisable sur le tableau de bord d'un véhicule, qui permette de déplacer un organe d'information visuelle suivant un mouvement complexe, et qui soit exempt de l'un au moins des inconvénients précités.

A cette fin, le dispositif de l'invention, par ailleurs conforme à la définition générique qu'en donne le préambule ci-dessus, est essentiellement caractérisé en ce que les premier et deuxième arbres sont concentriques, les premier et deuxième axes de rotation se confondant en un même axe de rotation commun, et en ce que ledit organe d'information visuelle est autoportant et s'étend, le long de ladite direction transversale et à distance de l'axe de rotation commun, sur une plus grande longueur que ledit organe de guidage.

Le terme "autoportant" sera ici compris comme applicable à tout objet capable de supporter son propre poids sans subir de déformation notable, comme c'est traditionnellement le cas, par exemple, pour l'aiguille d'un indicateur de tableau de bord.

Dans le mode de réalisation préféré de l'invention, le premier arbre au moins est creux et entoure au moins partiellement le deuxième arbre.

Par exemple, l'organe de guidage comprend essentiellement une glissière solidaire en rotation du premier arbre et dans laquelle l'organe d'information visuelle est guidé en translation suivant la direction transversale, à la manière d'un coulisseau.

Dans ce cas, il est possible de prévoir que le lien cinématique comprenne un pignon et une crémaillère mutuellement engrenés, que le pignon soit porté par le deuxième arbre et fixe en rotation par rapport à ce deuxième arbre autour de l'axe de rotation commun, que l'organe d'information visuelle soit doté d'une chape comprenant deux branches s'étendant suivant ladite direction transversale, que les deux branches de la chape soient mutuellement parallèles et disposées de part et d'autre du pignon, que la crémaillère soit formée sur une face interne de la première branche de la chape, et que la face interne de la deuxième branche de la chape coulisse librement par rapport au pignon.

Le dispositif indicateur peut avantageusement comprendre un boîtier dans lequel sont logés au moins les deux moteurs et formant au moins avec ces moteurs, avec l'organe d'information visuelle, et avec le lien cinématique, un module indicateur.

Dans ce cas, le boîtier présente par exemple une épaisseur s'étendant suivant la direction commune des arbres et un plan moyen perpendiculaire à cette direction commune, et les deux moteurs sont disposés côte à côte dans le plan moyen du boîtier sans recouvrement mutuel suivant l'épaisseur de ce boîtier.

Le dispositif indicateur peut aussi comprendre un cadran en regard duquel se déplace sélectivement l'organe d'information visuelle.

Ce cadran peut alors comprendre une première échelle sélectivement balayée par un point singulier de l'organe d'information visuelle par rotation de cet organe d'information visuelle autour de l'axe de rotation commun, et une deuxième échelle sélectivement balayée par le point singulier de l'organe d'information visuelle par translation de cet organe d'information visuelle suivant ladite direction transversale.

Ce cadran présente par exemple une forme au moins partiellement ovale ou elliptique.

En variante, ce cadran peut comporter une mire dotée de plusieurs secteurs en regard desquels se déplace sélectivement le point singulier de l'organe d'information visuelle.

Dans un mode de réalisation possible, l'organe d'information visuelle comprend, ou est constitué par, une aiguille allongée suivant ladite direction transversale.

Dans ce cas, ledit point singulier de l'organe d'information visuelle est par exemple constitué par l'extrémité de l'aiguille.

### BREVE DESCRIPTION DES FIGURES

D'autres caractéristiques et avantages de l'invention ressortiront pleinement de la description qui en est faite ci-après, à titre indicatif et nullement limitatif, en référence aux dessins annexés dans lesquels :
- la figure 1 est une vue en perspective d'un mode de réalisation possible de l'invention, utilisant un premier type de cadran ;
- la figure 2 est une vue en perspective rapprochée du module indicateur visible sur la figure 1 ;
- la figure 3 est une vue éclatée du module indicateur illustré à la figure 2, observé suivant un premier angle d'incidence;
- la figure 4 est une vue éclatée du module indicateur illustré à la figure 2, observé suivant un deuxième angle d'incidence;
- la figure 5 est une vue en perspective rapprochée de l'intérieur du module indicateur illustré à la figure 2 ;
- la figure 6 est une vue en perspective d'un mode de réalisation possible de l'invention, utilisant un deuxième type de cadran ;
- la figure 7 est une vue en perspective d'un mode de réalisation possible de l'invention, utilisant un troisième type de cadran.

### DESCRIPTION DETAILLEE DU MODE DE REALISATION

Comme annoncé précédemment, l'invention concerne un dispositif indicateur notamment utilisable sur le tableau de bord d'un véhicule.

Ce module 1 comprend notamment deux moteurs électriques 10 et 11, deux arbres concentriques 12 et 13, et un organe d'information visuelle 3, cet organe d'information visuelle étant constitué par une aiguille dans le mode de réalisation illustré et décrit ci-après de façon non limitative.

En toute hypothèse, l'organe d'information visuelle 3 doit être autoportant, c'est-à-dire capable de supporter son propre poids sans subir de déformation notable.

Les deux arbres 12 et 13 s'étendent suivant une direction commune et sont sélectivement entraînés en rotation autour d'un axe de rotation commun Z par les moteurs respectifs 10 et 11, le moteur 10 entraînant donc l'arbre 12 et le moteur 11 l'arbre 13.

L'organe 3 d'information visuelle, qui prend en l'occurrence la forme allongée et caractéristique d'une aiguille, est lié en rotation à l'arbre 12 autour de l'axe de rotation Z, cet organe 3 présentant ainsi une longueur disposée suivant une direction Y transversale à l'axe de rotation Z, et par exemple perpendiculaire à cet axe Z.

Le dispositif indicateur de l'invention comprend en outre un lien cinématique qui relie l'arbre 13 à l'aiguille 3 et qui est conçu pour transformer une rotation de cet arbre 13 autour de l'axe de rotation commun Z en une translation de l'aiguille 3 suivant sa longueur de direction Y, l'aiguille 3 étant à cette fin libre de subir, par rapport à l'arbre 12, une translation suivant sa longueur de direction Y.

Dans le mode de réalisation illustré, l'arbre 12 est creux, entoure l'arbre 13, et porte à son extrémité libre une glissière 5 qui est fixe en rotation par rapport à cet arbre 12 et dans laquelle l'aiguille 3 est guidée en translation, à la manière d'un coulisseau, suivant la direction Y de sa longueur.

Par ailleurs, la longueur que présente l'aiguille 3 suivant la direction Y est supérieure à la longueur que présente la glissière 5 suivant cette même direction Y.

Le lien cinématique précédemment évoqué peut alors être essentiellement constitué par une crémaillère 7 et un pignon 8 mutuellement engrenés, le pignon 8 étant porté par l'arbre interne 13 et fixe en rotation par rapport à cet arbre 13 autour de l'axe de rotation commun Z.

L'aiguille 3 est dotée d'une chape 6 formée de deux branches 61 et 62 qui s'étendent, parallèlement l'une à l'autre, suivant la longueur de l'aiguille 3 et qui sont disposées de part et d'autre du pignon 8.

Dans un tel agencement, la crémaillère 7 est par exemple formée sur la face interne de la branche 61 de la chape 6, la face interne de l'autre branche 62 étant en revanche préférablement lisse et / ou distante du pignon 8 pour pouvoir coulisser librement par rapport à ce pignon.

Comme le montrent notamment les figures 2, 6 et 7, l'aiguille 3, dans le mode de réalisation illustré, est montée coulissante dans la glissière 5 par les faces externes des branches 61 et 62 de la chape 6.

De préférence, le module indicateur 1 comprend par ailleurs un boîtier 2 dans lequel sont logés les moteurs 10 et 11.

Ce boîtier 2 forme, au moins avec les moteurs 10 et 11, avec l'organe d'information visuelle 3 en l'occurrence constitué par une aiguille, et avec le lien cinématique 7 et 8, une unité matérielle remplissant la fonction d'un module indicateur 1.

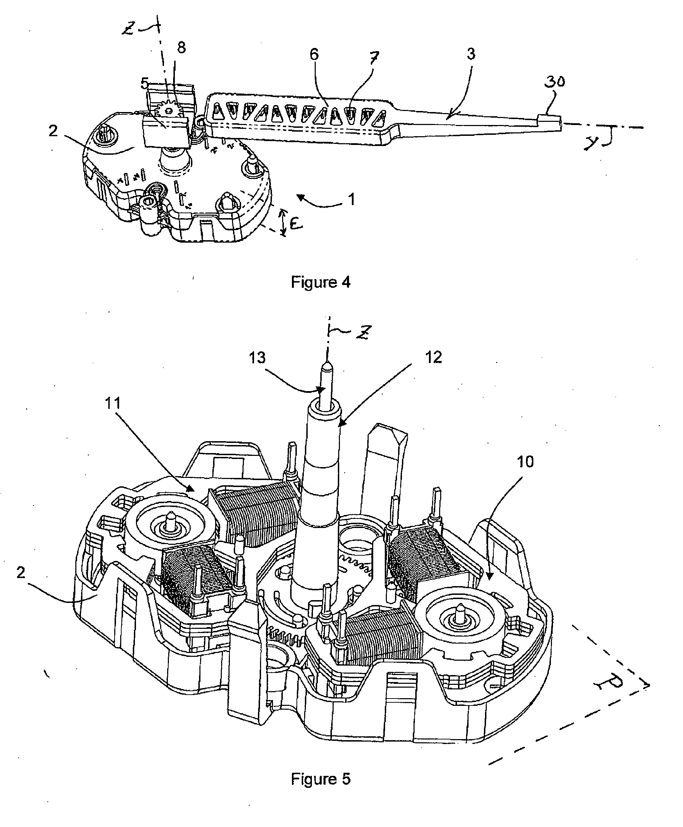

Le boîtier 2 présente, suivant la direction commune des arbres 12 et 13, une dimension minimale E, ou épaisseur (figure 4), au moins approximativement constante et coupée par un plan moyen P (figure 5) de part et d'autre duquel s'étend le boîtier 2.

De préférence, les moteurs 10 et 11 sont disposés côte à côte dans le plan moyen P du boîtier 2 sans recouvrement mutuel suivant l'épaisseur E de ce boîtier.

Les moteurs 10 et 11 entraînent les arbres 12 et 13 par l'intermédiaire de pignons de renvoi (non visibles) suivant un principe bien connu de l'homme du métier et par exemple décrit dans le brevet FR 2 885 688 précité.

Comme le montrent les figures 1, 6 et 7, le dispositif indicateur peut comprendre, en plus du module indicateur 1, un cadran 4 fixe par rapport au boîtier 2 et en regard duquel l'aiguille 3 se déplace en fonctionnement.

Ce cadran 4, qui est par exemple celui d'un tachymètre, peut, notamment s'il est opaque et si l'aiguille 3 n'est pas disposée devant sa face visible, comporter une ouverture 9 (figure 1) ne laissant essentiellement apparaître que l'extrémité 30 de l'aiguille 3, qui constitue un point singulier de l'organe d'information visuelle particulier que forme cette aiguille 3.

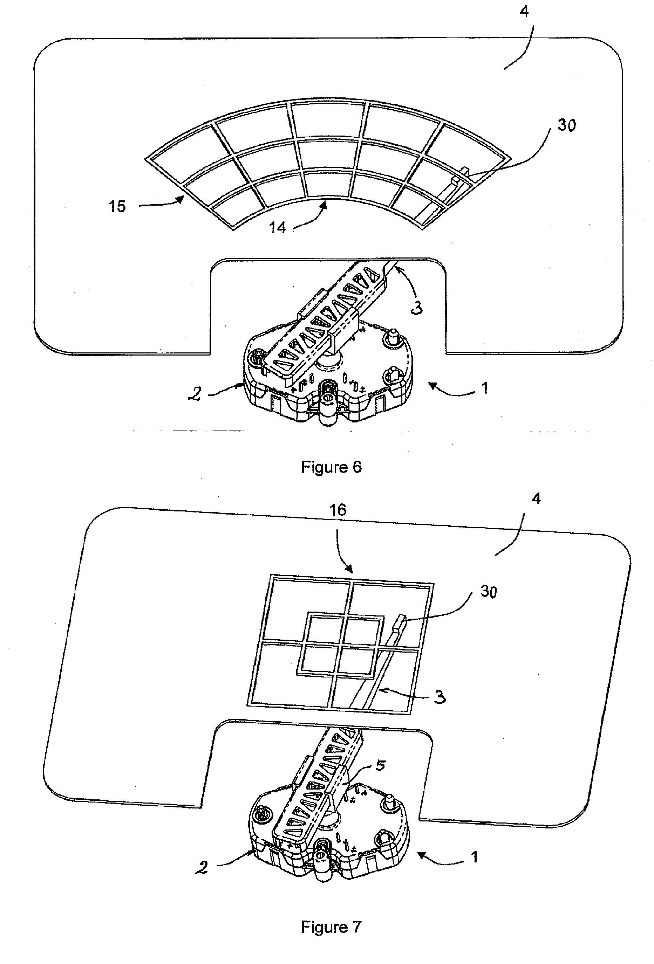

Comme l'extrémité 30 de l'aiguille 3 n'est pas astreinte à se déplacer exclusivement le long d'une trajectoire purement linéaire ou purement circulaire mais peut au contraire être déplacée à volonté dans un espace à deux dimensions par combinaison des mouvements de rotation et de translation respectivement contrôlés par les moteurs 10 et 11, l'ouverture 9, et plus généralement la trajectoire de l'extrémité 30 de l'aiguille 3, n'est pas astreinte à présenter la forme classique en arc de cercle, mais peut par exemple présenter une forme au moins partiellement ovale ou elliptique (figures 1 et 6).

Pour la même raison, à savoir la possibilité de déplacer à volonté dans un espace à deux dimensions tout point singulier de l'organe d'information visuelle 3, en l'occurrence l'extrémité 30 de l'aiguille 3, le cadran 4 peut être conçu pour disposer de deux échelles différentes.

Plus précisément, le cadran 4 peut comprendre une première échelle 14 que l'extrémité 30 de l'aiguille 3 peut balayer en fonctionnement par rotation de cette aiguille 3 autour de l'axe de rotation commun Z, et une deuxième échelle 15 que l'extrémité 30 de l'aiguille 3 peut balayer en fonctionnement par translation de cette aiguille 3 suivant la direction Y de sa longueur.

La première échelle 14 peut ainsi, par exemple, donner une indication de vitesse du véhicule, tandis que la deuxième échelle 15 donne, par exemple, une indication de régime moteur.

Dans cet exemple, et comme le comprendra aisément l'homme du métier à la lecture de la présente description, le moteur 11, qui commande le pignon 8 par l'intermédiaire de l'arbre 13 pour rendre compte du régime moteur sur l'échelle radiale 15, devra donc recevoir une consigne non seulement représentative du régime moteur mais également représentative de la vitesse du véhicule, de manière à garantir l'affichage correct du régime moteur, cet affichage ne dépendant pas seulement du mouvement de rotation de l'arbre 13 mais dépendant en fait du mouvement relatif de rotation autour de l'axe Z de cet arbre 13 par rapport à l'arbre 12 dont la position angulaire représente la vitesse du véhicule.

Dans une variante illustrée à la figure 7, le cadran 4 comporte par exemple une mire 16 dotée de plusieurs secteurs en regard desquels l'extrémité 30 de l'aiguille 3 peut se déplacer en fonctionnement. La possibilité de mouvement plan de l'aiguille 3 permet à l'extrémité 30 de cette aiguille d'atteindre n'importe quel secteur de la mire et d'indiquer une zone de confort optimale d'utilisation du véhicule en combinant, par exemple et de façon non limitative, les informations de consommation, de régime moteur, ou de vitesse.

L'ensemble réalisé est ainsi très compact dans la mesure où l'encombrement est essentiellement réduit à celui de l'aiguille 3, qui est la seule partie à pouvoir se déplacer linéairement, et où le cadran 4 n'est pas astreint à présenter la forme d'une portion de couronne circulaire.

## Revendications

1. Dispositif indicateur notamment utilisable sur le tableau de bord d'un véhicule et comprenant au moins des premier et deuxième moteurs (10, 11), des premier et deuxième arbres (12, 13), un organe de guidage (5), un organe d'information visuelle (3), et un lien cinématique (7, 8), les premier et deuxième arbres (12, 13) étant sélectivement entraînés en rotation par les premier et deuxième moteurs respectifs (10, 11) autour de premier et deuxième axes de rotation respectifs (Z, Z), ledit organe de guidage (5) étant lié en rotation au premier arbre (12) autour du premier axe de rotation (Z) et s'étendant suivant une direction (Y) transversale à ce premier axe de rotation (Z), ledit organe d'information visuelle (3) étant guidé en translation, le long de ladite direction transversale (Y), par l'organe de guidage (5), et ledit lien cinématique (7, 8) reliant le deuxième arbre (13) à l'organe d'information visuelle (3) et transformant sélectivement une rotation du deuxième arbre (13) autour du deuxième axe de rotation (Z) en une translation de l'organe d'information visuelle (3) suivant ladite direction transversale (Y), **caractérisé en ce que** les premier et deuxième arbres (12, 13) sont concentriques, les premier et deuxième axes de rotation (Z, Z) se confondant en un même axe de rotation commun (Z), et **en ce que** ledit organe d'information visuelle (3) est autoportant et s'étend, le long de ladite direction transversale (Y) et à distance de l'axe de rotation commun (Z), sur une plus grande longueur que ledit organe de guidage (5).

2. Dispositif indicateur suivant la revendication 1, **caractérisé en ce que** le premier arbre (12) au moins est creux et entoure au moins partiellement le deuxième arbre (13).

3. Dispositif indicateur suivant l'une quelconque des revendications précédentes, **caractérisé en ce que** l'organe de guidage (5) comprend essentiellement une glissière (5) solidaire en rotation du premier arbre (12) et dans laquelle l'organe d'information visuelle (3) est guidé en translation suivant la direction transversale (Y) à la manière d'un coulisseau.

4. Dispositif indicateur suivant les revendications 2 et 3, **caractérisé en ce que** ledit lien cinématique (7, 8) comprend un pignon (8) et une crémaillère (7) mutuellement engrenés, **en ce que** le pignon (8) est porté par le deuxième arbre (13) et fixe en rotation par rapport à ce deuxième arbre (13) autour de l'axe de rotation commun (Z), **en ce que** l'organe d'information visuelle (3) est doté d'une chape (6) comprenant deux branches (61, 62) s'étendant suivant ladite direction transversale (Y), **en ce que** les deux branches (61, 62) de la chape (6) sont mutuellement parallèles et disposées de part et d'autre du pignon (8), **en ce que** la crémaillère (7) est formée sur une face interne de la première branche (61) de la chape (6), et **en ce que** la face interne de la deuxième branche (62) de la chape (6) coulisse librement par rapport au pignon (8).

5. Dispositif indicateur suivant l'une quelconque des revendications précédentes, **caractérisé en ce qu'**il comprend en outre un boîtier (2) dans lequel sont logés au moins les deux moteurs (10, 11) et formant au moins avec ces moteurs, avec l'organe d'information visuelle (3), et avec le lien cinématique (7, 8), un module indicateur (1).

6. Dispositif indicateur suivant la revendication 5, **caractérisé en ce que** le boîtier (2) présente une épaisseur (E) s'étendant suivant la direction commune des arbres (12, 13) et un plan moyen perpendiculaire à cette direction commune, et **en ce que** les deux moteurs (10, 11) sont disposés côte à côte dans le plan moyen du boîtier (2) sans recouvrement mutuel suivant l'épaisseur (E) de ce boîtier (2).

7. Dispositif indicateur suivant l'une quelconque des revendications précédentes, **caractérisé en ce qu'**il comprend en outre un cadran (4) en regard duquel se déplace sélectivement l'organe d'information visuelle (3).

8. Dispositif indicateur suivant la revendication 7, **caractérisé en ce que** le cadran (4) comprend une première échelle (14) sélectivement balayée par un point singulier (30) de l'organe d'information visuelle (3) par rotation de cet organe d'information visuelle (3) autour de l'axe de rotation commun (Z), et une deuxième échelle (15) sélectivement balayée par le point singulier (30) de l'organe d'information visuelle (3) par translation de cet organe d'information visuelle (3) suivant ladite direction transversale (Y).

9. Dispositif indicateur suivant l'une quelconque des revendications 7 et 8, **caractérisé en ce que** le cadran (4) présente une forme au moins partiellement ovale ou elliptique.

10. Dispositif indicateur suivant la revendication 8, **caractérisé en ce que** le cadran (4) comporte une mire (16) dotée de plusieurs secteurs en regard desquels se déplace sélectivement le point singulier (30) de l'organe d'information visuelle (3).

11. Dispositif indicateur suivant l'une quelconque des revendications précédentes, **caractérisé en ce que** ledit organe d'information visuelle (3) comprend ou est constitué par une aiguille (3) allongée suivant ladite direction transversale (Y).

12. Dispositif suivant l'une quelconque des revendications 8 et 10 combinée à la revendication 11, **caractérisé en ce que** ledit point singulier (30) de l'organe d'information visuelle (3) est constitué par l'extrémité de l'aiguille.

## Patentansprüche

1. Anzeigevorrichtung, die insbesondere auf dem Armaturenbrett eines Fahrzeugs verwendbar ist und wenigstens erste und zweite Motoren (10, 11), erste und zweite Wellen (12, 13), ein Führungsorgan (5), ein visuelles Informationsorgan (3) und eine kinematische Verbindung (7, 8) umfasst, wobei die ersten und zweiten Wellen (12, 13) selektiv in Rotation durch die jeweiligen ersten und zweiten Motoren (10, 11) um jeweils erste und zweite Rotationsachsen (Z, Z) angetrieben sind, wobei das genannte Führungsorgan (5) in Rotation um die erste Welle (12) um die erste Rotationsachse (Z) verbunden ist und sich gemäß einer zu dieser ersten Rotationsachse (Z) transversalen Richtung (Y) erstreckt, wobei das genannte visuelle Informationsorgan (3) in Translation entlang der genannten transversalen Richtung (Y) durch das Führungsorgan (5) geführt ist, und die genannte kinematische Verbindung (7, 8) die zweite Welle (13) mit dem visuellen Informationsorgan (3) verbindet und selektiv eine Rotation der zweiten Welle (13) um die zweite Rotationswelle (Z) in einer Translation des visuellen Informationsorgans (3) gemäß der genannten transversalen Richtung (Y) umwandelt, **dadurch gekennzeichnet, dass** die ersten und zweiten Wellen (12, 13) konzentrisch sind, wobei die ersten und zweiten Rotationsachsen (Z, Z) in einer und derselben gemeinsamen Achse (Z) zusammenfallen, und dass das genannte visuelle Informationsorgan (3) selbsttragend ist und sich entlang der genannten transversalen Richtung (Y) und entfernt von der gemeinsamen Rotationsachse (Z) auf eine größere Länge als das genannte Führungsorgan (3) erstreckt.

2. Anzeigeorgan gemäß Anspruch 1, **dadurch gekennzeichnet, dass** die erste Welle (12) wenigstens hohl ist und wenigstens teilweise die zweite Welle (13) umgibt.

3. Anzeigevorrichtung gemäß einem der voranstehenden Ansprüche, **dadurch gekennzeichnet, dass** das Führungsorgan (5) im Wesentlichen eine Gleitschiene (5) umfasst, die in Rotation fest mit der ersten Welle (12) befestigt ist und in der das visuelle Informationsorgan (3) in Translation gemäß der transversalen Richtung (Y) nach Art eines Schlittens geführt ist.

4. Anzeigevorrichtung gemäß Anspruch 2 und 3, **dadurch gekennzeichnet, dass** die genannte kinematische Verbindung (7, 8) ein Ritzel (8) und eine Zahnstange (7) umfasst, die gegenseitig eingegriffen sind, und dass das Ritzel (8) durch die zweite Welle (13) getragen ist und in Rotation im Verhältnis zu dieser zweiten Welle (13) um die gemeinsame Rotationsachse (Z) fest ist, dass das visuelle Informationsorgan (3) mit einer Abdeckung (6) versehen ist, die zwei Zweige (61, 62) umfasst, welche sich gemäß der genannten transversalen Richtung (Y) erstrecken, dass die zwei Zweige (61, 62) der Abdeckung (6) gegenseitig parallel und auf jeder Seite des Ritzels (8) angeordnet sind, dass die Zahnstange (7) auf einer inneren Seite des ersten Zweigs (61) der Abdeckung (6) gebildet ist und dass die innere Seite des zweiten Zweiges (62) der Abdeckung (6) im Verhältnis zum Ritzel (8) frei gleitet.

5. Anzeigevorrichtung gemäß einem der voranstehenden Ansprüche, **dadurch gekennzeichnet, dass** sie darüber hinaus ein Gehäuse (2) umfasst, in dem wenigstens zwei Motoren (10, 11) untergebracht sind und das wenigstens mit diesen Motoren, mit dem visuellen Anzeigeorgan (3) und mit der kinematischen Verbindung (7, 8) ein Anzeigemodul bildet.

6. Anzeigevorrichtung gemäß Anspruch 5, **dadurch gekennzeichnet, dass** das Gehäuse (2) eine Dicke (E) aufweist, die sich gemäß einer gemeinsamen Richtung der Wellen (12, 13) und der zu dieser gemeinsamen Richtung lotrechten mittleren Ebene erstreckt, und dass die zwei Motoren (10, 11) in der mittleren Ebene des Gehäuses (2) Seite an Seite ohne gegenseitige Abdeckung gemäß der Dicke (E) dieses Gehäuses (2) angeordnet sind.

7. Anzeigevorrichtung gemäß einem der voranstehenden Ansprüche, **dadurch gekennzeichnet, dass** sie darüber hinaus eine Skala (4) umfasst, gegenüber der sich das visuelle Organisationsorgan (3) selektiv verschiebt.

8. Anzeigevorrichtung gemäß Anspruch 7, **dadurch gekennzeichnet, dass** die Skala (4) eine erste Maßeinteilung (14), die selektiv durch einen einzigen Punkt (30) des visuellen Informationsorgans (3) per Rotation dieses visuellen Informationsorgans (3) um die gemeinsame Rotationsachse (Z) abgetastet wird, und eine zweite Maßeinteilung (15), die selektiv durch den einzigen Punkt (30) des visuellen Informationsorgans (3) per Translation dieses visuellen Informationsorgans (3) gemäß der genannten transversalen Richtung (Y) abgetastet wird, umfasst.

9. Anzeigevorrichtung gemäß Anspruch 7 und 8, **dadurch gekennzeichnet, dass** die Skala (4) eine wenigstens ovale oder elliptische Form aufweist.

10. Anzeigevorrichtung gemäß Anspruch 8, **dadurch gekennzeichnet, dass** die Skala (4) ein Testbild (16) umfasst, das mit mehreren Sektoren versehen ist, denen gegenüber sich selektiv der einzige Punkt (30) des visuellen Informationsorgans (3) verschiebt.

11. Anzeigevorrichtung gemäß einem der voranstehenden Ansprüche, **dadurch gekennzeichnet, dass** das genannte visuelle Informationsorgan (3) eine gemäß der genannten transversalen Richtung (Y) verlängerte Nadel (3) umfasst oder dadurch gebildet ist.

12. Vorrichtung gemäß Anspruch 8 und 10 in Kombination mit Anspruch 11, **dadurch gekennzeichnet, dass** der genannte einzige Punkt (30) des visuellen Informationsorgans (3) durch das Ende der Nadel gebildet ist.

## Claims

1. An indicator device that can be used on an instrument panel of a vehicle and comprising at least a first and a second electric motor, a first and a second shaft (12, 13), a guide member (5), a visual information member (3), and a kinematic linkage (7, 8), with the first and second shafts (12, 13) being selectively driven in rotation by the respective first and second motors (10, 11) about the respective first and second axes of rotation (Z, Z), with said guide member (5) being connected in rotation to the first shaft (12) about the first axis of rotation (Z) and extending in a direction (Y) transverse to such first axis of rotation (Z), with said visual information member (3) being guided in translation, in said transverse direction (Y) by the guide member (5) and with said kinematic linkage (7, 8) connecting the second shaft (13) to the visual information member (3) and selectively converting a rotation of the second shaft (13) about the second axis of rotation (Z) into a translation of the visual information member (3) in said transverse direction (Y), **characterized in that** the first and second shafts (12, 13) are concentric, with the first and second axes of rotation (Z, Z) merging into a single common axis of rotation (Z), and **in that** said visual information member (3) is self-supporting and extends in said transverse direction (Y) and at a distance from the common axis of rotation (Z), on a longer length than said guide member (5).

2. An indicator device according to claim 1, **characterized in that** at least the first shaft (12) is hollow and at least partially surrounds the second shaft (13).

3. An indicator device according to any one of the preceding claims, **characterized in that** the guide member (5) substantially comprises a slide (5) solid in rotation with the first shaft (12) and wherein the visual information member (3) is guided in translation in the transverse direction (Y) like a slide.

4. An indicator device according to claims 2 and 3, **characterized in that** said kinematic linkage (7, 8) comprises mutually meshed pinion (8) and rack (7), **in that** the pinion (8) is carried by the second shaft (13) and rotationally fixed relative to said second shaft (13) about the common axis of rotation (Z), **in that** the visual information member (3) is provided with a yoke (6) comprising two branches (61, 62) extending in said transverse direction (Y), **in that** the two branches (61, 62) of the yoke (6) are mutually parallel and positioned on either side of the pinion (8), **in that** the rack (7) is formed on an inner face of the first branch (61) of the yoke (6), and **in that** the inner face of the second branch (62) of the yoke (6) freely slides relative to the pinion (8).

5. An indicator device according to any one of the preceding claims, **characterized in that** it further comprises a casing (2) wherein at least two motors (10, 11) are housed and forming a display module (1) at least with such motors, with the visual information member (3), and with the kinematic linkage (7, 8).

6. An indicator device according to claim 5, **characterized in that** the casing (2) has a thickness (E) extending in the common direction of the shafts (12, 13) and a mean plane perpendicular to the common direction, and **in that** the two motors (10, 11) are positioned side by side in the mean plane of the casing (2) without mutual overlapping in the thickness (E) of the casing (2).

7. An indicator device according to any one of the preceding claims, **characterized in that** it further comprises a dial (4) oppositewhich the visual information member (3) selectively moves.

8. An indicator device of claim 7, **characterized in that** the dial (4) comprises a first scale (14) selectively scanned by a singular point (30) of the visual information member (3) by rotation of such visual information member (3) about the common axis of rotation (Z), and a second scale (15) selectively scanned by the singular point (30) of the visual information member (3) by translation of such visual information member (3) in said transverse direction (Y).

9. An indicator device according to any one of claims 7 and 8, **characterized in that** the dial (4) has an at least partially elliptical or oval shape.

10. An indicator device according to claim 8, **characterized in that** the dial (4) comprises a test pattern (16) with multiple sectors against which the singular point (30) of the visual information (3) selectively moves.

11. An indicator device according to any one of the preceding claims, **characterized in that** said visual information member (3) comprises or is constituted of a needle (3) extending in said transverse direction (Y).

12. A device according to any one of claims 8 and 10, combined with claim 11, **characterized in that** said singular point (30) of the visual information member (3) is constituted by the end of the needle.
